# EUROPEAN PATENT SPECIFICATION

(11) **EP 4 017 678 B1**
(45) Date of publication and mention of the grant of the patent: **03.04.2024**
(21) Application number: 19941806.2
(22) Date of filing: 19.08.2019
(51) Int. Cl.: B23P 19/04, B25J 15/00, B25J 9/14, B25J 15/02, B65D 90/00

(54) **GRIPPER FOR HANDLING TWISTLOCK**
GREIFER ZUM HANDHABEN EINES DREHRIEGELS
ORGANE DE PRÉHENSION SERVANT À MANIPULER UN VERROU TOURNANT

(43) Date of publication of application: 29.06.2022
(73) Proprietor: ABB SCHWEIZ AG, 5400 Baden (CH)
(72) Inventor: TIAN, Ye, Shanghai 201108 (CN); YANG, Jibo, Shanghai 200050 (CN); MAO, Yichao, Hangzhou, Zhejiang 310000 (CN)
(74) Representative: Zimmermann & Partner Patentanwälte mbB
(86) International application number: PCT/CN2019/101279
(87) International publication number: WO 2021/031058

(56) References cited:
- CN-A- 105 945 558
- CN-A- 108 161 960
- CN-A- 108 555 565
- CN-A- 108 555 565
- CN-U- 205 521 454
- CN-U- 205 521 454
- CN-U- 208 914 114
- CN-U- 209 158 427
- CN-U- 209 158 427
- JP-A- H05 305 593
- JP-A- 2017 189 850

## Description

### FIELD

Embodiments of present disclosure generally relate to the field of twistlock handling, and more particularly, to a gripper for handling a twistlock for use in fixing a container and a robot comprising the gripper.

### BACKGROUND

Twistlocks are devices that are used in transport, and are commonly used with shipping containers conforming to ISO regulation (International Standards Organization). Such twistlocks are predominantly used in shipping where the twistlocks interlock between corner castings of two adjacent containers, or in shipping where containers are fixed to fixed castings provided on the deck of a ship. Modern ports aim to realize high efficiency and automation of container loading and unloading. However, twistlock handling becomes a stumbling block for such an automation process. CN205521454U discloses a gripper for handling a twistlock according to the preamble of claim 1.

Further relevant grippers are disclosed in CN108555565A, CN108161960A, CN209158427U and JPH05305593A.

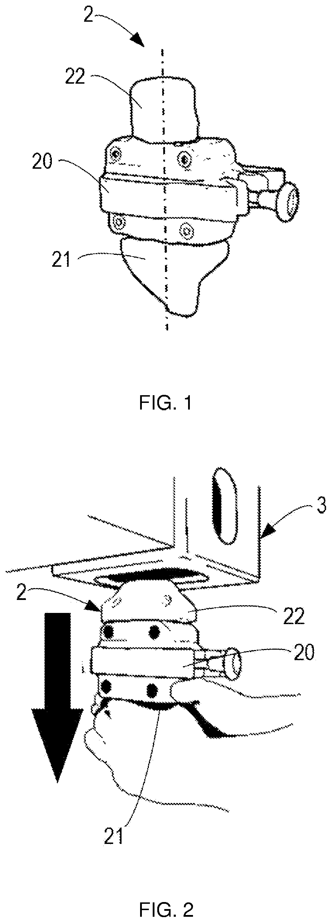

FIG. 1 illustrates a perspective view of a conventional twistlock 2 for use by a container. As shown in FIG. 1, the twistlock 2 includes a body 20, a first cone 21 (also referred to as a lower cone), and a second cone 22 (also referred to as an upper cone). During use, the first cone 21 or the second cone 22 may be fixed onto the corresponding container. FIG. 2 illustrates a conventional method of removing the twistlock 2 from the container 3. As shown in FIG. 2, when removing the twistlock 2 from the container 3, an operator needs to hold the body 20 of the twistlock 2 with one hand and twist the first cone 21 with the other hand to unlock and pull out the twistlock 2 from the container 3. A mounting process of the twistlock 2 onto the container 3 is in the reverse order. The manual operation on the twistlock 2 renders the twistlock handling process laborious and time consuming.

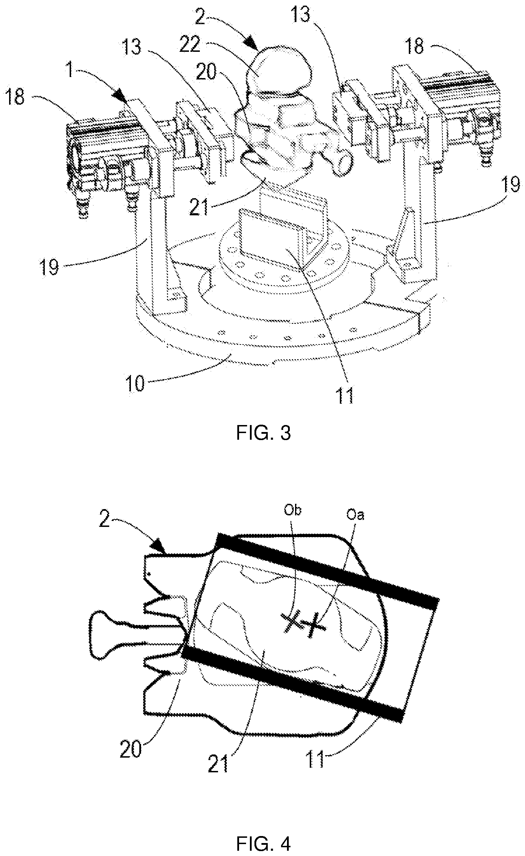

FIG. 3 illustrates a conventional gripper 1 for handling the twistlock 2. As shown, the gripper 1 includes a base 10, a twister 11 rotatably arranged on the base 10, a pair of clamps 13 coupled to the base 10 via corresponding brackets 19, and a pair of driving devices 18 configured to drive the respective clamps 13. During mounting the twistlock 2 onto the container 3 or dismounting the twistlock 2 from the container 3, the clamps 13 hold the body 20 of the twistlock 2 first, and then the twister 11 is driven by a motor (not shown) to twist the first cone 21 of the twistlock 2.

FIG. 4 illustrates misalignment between a rotation axis Oa of the twister 11 and a rotation axis Ob of the cones 21, 22 of the twistlock 2. As shown in FIGS. 3 and 4, if the positioning accuracy between the gripper 1 and the twistlock 2 is low, the rotation axis Oa and the rotation axis Ob may be not well aligned. In an ideal condition of accurate alignment, a torque of the twister 11 equals to a resistance moment of the twistlock 2. In contrast, in a condition of misalignment, the misalignment may cause the torque of the twister 11 much larger than the resistance moment of the twistlock 2. This requires a large motor to drive the twister 11. In this case, the twisting of the first cone 21 is hardly to achieve. As a solution, the motor of the twister 11 may output a relatively large torque so as to force the first cone 21 to rotate. However, since the body 20 of the twistlock 2 is held by the clamps 13 during the twisting of the first cone 21, the clamps 13 may experience a large torsion force which may damage the clamps 13.

### SUMMARY

Embodiments of the present disclosure provide a gripper for handling a twistlock for use in fixing a container and a robot comprising the gripper.

In a first aspect, a gripper for handling a twistlock is provided. The twistlock comprises a body, a first cone and a second cone. The gripper comprises: a pair of clamps arranged opposite to each other and configured to hold the body of the twistlock during mounting or dismounting the twistlock; a twister configured to twist the first cone of the twistlock when the body of the twistlock is held by the clamps; and a pair of cylinders each comprising a gas supply pipe and an output shaft connected to the respective clamp, wherein the gas supply pipes of the cylinders are in fluid communication with each other.

In some embodiments, the gripper further comprises a gas supply source connected to each of the gas supply pipes to supply gas.

In some embodiments, the gripper further comprises a pair of linear sliders each arranged at an inner side of the respective clamp and configured to be slidable relative to the respective clamp upon being driven by the body of the twistlock; and a pair of elastic elements each arranged between the respective linear slider and the respective clamp to return the respective linear slider when the body of the twistlock is released from the linear sliders.

In some embodiments, each of the linear sliders is coupled to the respective clamp via a linear slide rail.

In some embodiments, each of the elastic elements comprises at least one return spring.

In a second aspect, a robot is provided. The robot comprises the gripper according to the first aspect of the present disclosure.

According to various embodiments of the present disclosure, the gas supply pipes of the cylinders for driving the clamps are in fluid communication with each other. With such an arrangement, even when the clamps hold the body of the twistlock tightly, the twistlock can still move along a movement direction of the output shaft the cylinders. In this way, the rotation axis of the cones of the twistlock and the rotation axis of the twister tend to be aligned with each other in the movement direction of the output shaft the cylinders, rendering the first cone of the twistlock easy to be twisted.

Moreover, according to some embodiments of the present disclosure, the linear sliders are slidably arranged on the clamps so as to hold the body of the twistlock. With such an arrangement, even when the linear sliders hold the body of the twistlock tightly, the twistlock can still move along the movement direction of the linear sliders. In this way, the rotation axis of the cones of the twistlock and the rotation axis of the twister tend to be aligned with each other in the movement direction of the linear sliders, rendering the first cone of the twistlock easy to be twisted.

### DESCRIPTION OF DRAWINGS

Drawings described herein are provided to further explain the present disclosure and constitute a part of the present disclosure. The example embodiments of the disclosure and the explanation thereof are used to explain the present disclosure, rather than to limit the present disclosure improperly.
FIG. 1 illustrates a perspective view of a conventional twistlock for use by a container;
FIG. 2 illustrates a conventional method of removing the twistlock from the container;
FIG. 3 illustrates a conventional gripper for handling the twistlock;
FIG. 4 illustrates misalignment between a rotation axis of the twister and a rotation axis of the cones of the twistlock;
FIG. 5 illustrates a schematic view of a gripper for handling the twistlock, in accordance with an embodiment of the present disclosure;
FIG. 6 illustrates a force condition of the first cone of the twistlock when the rotation axis of the twister is not aligned with the rotation axis of the cones of the twistlock;
FIG. 7 illustrates a force condition of the first cone of the twistlock when the rotation axis of the twister is aligned with the rotation axis of the cones of the twistlock; and
FIGS. 8 and 9 illustrate an automatic alignment process between the rotation axis of the twister and the rotation axis of the cones of the twistlock, in accordance with an embodiment of the present disclosure.

Throughout the drawings, the same or similar reference symbols are used to indicate the same or similar elements.

### DETAILED DESCRIPTION OF EMBODIEMTNS

Principles of the present disclosure will now be described with reference to several example embodiments shown in the drawings. Though example embodiments of the present disclosure are illustrated in the drawings, it is to be understood that the embodiments are described only to facilitate those skilled in the art in better understanding and thereby achieving the present disclosure, rather than to limit the scope of the disclosure in any manner.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below. A definition of a term is consistent throughout the description unless the context clearly indicates otherwise.

Unless specified or limited otherwise, the terms "mounted," "connected," "supported," and "coupled" and variations thereof are used broadly and encompass direct and indirect mountings, connections, supports, and couplings. Furthermore, "connected" and "coupled" are not restricted to physical or mechanical connections or couplings. In the description below, like reference numerals and labels are used to describe the same, similar or corresponding parts in the figures. Other definitions, explicit and implicit, may be included below.

As discussed above, in a condition of misalignment between the rotation axis Oa of the twister 11 and the rotation axis Ob of the cones 21, 22 of the twistlock 2, the misalignment may cause the torque of the twister 11 much larger than the resistance moment of the twistlock 2. In this case, the twisting of the first cone 21 is hardly to achieve. Moreover, in case where the motor of the twister 11 outputs a relatively large torque so as to force the first cone 21 to rotate, the clamps 13 may experience a large torsion force which may damage the clamps 13.

According to embodiments of the present disclosure, to compensate for the misalignment between the rotation axis Oa of the twister 11 and the rotation axis Ob of the cones 21, 22 of the twistlock 2, the clamps 13 and their driving devices 18 are specially designed, such that the rotation axis Oa and the rotation axis Ob tend to be automatically aligned with each other during twisting the first cone 21 of the twistlock 2. The above idea may be implemented in various manners, as will be described in detail in the following paragraphs.

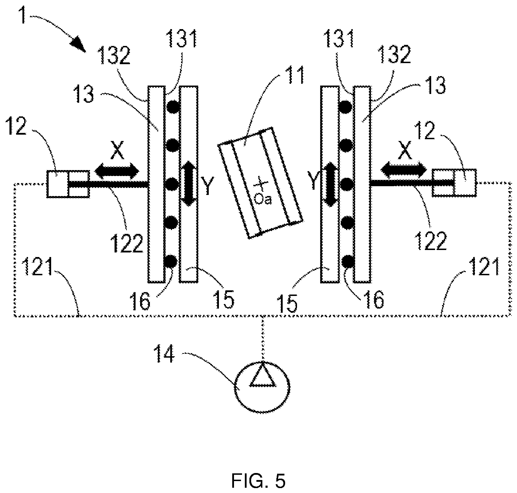

Hereinafter, the principles of the present disclosure will be described in detail with reference to FIGS. 5-9. Referring to FIG. 5 first, FIG. 5 illustrates a schematic view of a gripper 1 for handling the twistlock 2, in accordance with an embodiment of the present disclosure. The gripper 1 may be mounted on an end axis of the robot. Under driving of the robot, the gripper 1 may handle the twistlock 2 during mounting the twistlock 2 onto the container 3 or dismounting the twistlock 2 from the container 3.

The twistlock 2 may have various known constructions. For example, as described with reference to FIGS. 1-2, the twistlock 2 may include a body 20, a first cone 21 (also referred to as a lower cone), and a second cone 22 (also referred to as an upper cone). The first cone 21 and the second cone 22 are linked to each other. That is, when one of the first cone 21 and the second cone 22 is driven to rotate, the other one of the first cone 21 and the second cone 22 rotates accordingly. During use, the first cone 21 and the second cone 22 may be fixed onto the corresponding containers. It is to be understood that the present disclosure is directed to a new gripper 1 for handling the twistlock 2, rather than improvements of the twistlock 2 per se. Thus, the internal construction of the twistlock 2 and its operating principle would not be described in detail hereinafter.

As shown in FIG. 5, the gripper 1 generally includes a pair of clamps 13, a twister 11, and a pair of cylinders 12.

The clamps 13 are arranged opposite to each other so as to hold the body 20 of the twistlock 2 during mounting the twistlock 2 onto the container 3 or dismounting the twistlock 2 from the container 3. The body 20 of the twistlock 2 may be held by inner sides 131 of the clamps 13.

The twister 11 is used to twist the first cone 21 of the twistlock 2 when the body 20 of the twistlock 2 is held by the clamps 13 so as to mount the twistlock 2 onto the container 3 or dismount the twistlock 2 from the container 3. In some embodiments, as shown in FIG. 5, the twister 11 includes two parts spaced apart from each other. The two parts may cooperate with each other so as to twist the first cone 21 of the twistlock 2. It is to be understood that the construction of the twister 11 is not limited to that shown in FIG. 5. In other embodiments, the twister 11 may include more than two parts. Similarly, these parts may cooperate with each other so as to twist the first cone 21 of the twistlock 2.

The cylinders 12 are used to drive the corresponding clamps 13 to translate in a direction X. Each of the cylinders 12 includes an output shaft 122 and a gas supply pipe 121. The output shaft 122 is connected to a back side 132 of the respective clamp 13 so as to push and pull the respective clamp 13. Under driving of the respective cylinders 12, the clamps 13 may translate with respect to each other in the direction X so as to hold or release the body 20 of the twistlock 2. The gas needed by each of the cylinders 12 may be supplied via the respective gas supply pipe 121. As shown in FIG. 5, the two gas supply pipes 121 of the cylinders 12 are joined together. In other words, the gas supply pipes 121 of the cylinders 12 are in fluid communication with each other. With such an arrangement, even when the clamps 13 hold the body 20 of the twistlock 2 tightly, the twistlock 2 can still move along the movement direction X of the clamps 13.

In some embodiments, the gripper 1 further includes a gas supply source 14 connected to each of the gas supply pipes 121. The gas supply source 14 may supply gas to each of the cylinders 12 via the respective gas supply pipe 121. In other embodiments, the gripper 1 may include one or more additional gas supply sources connected to each of the gas supply pipes 121. The number of the gas supply sources is not intended to be limited in the present disclosure.

In some embodiments, as shown in FIG. 5, the gripper 1 further includes a pair of linear sliders 15. Each of the linear sliders 15 is slidably arranged at an inner side 131 of the respective clamp 13. That is, each of the linear sliders 15 is slidable relative to the respective clamp 13 upon being driven by the body 20 of the twistlock 2 during mounting the twistlock 2 onto the container 3 or dismounting the twistlock 2 from the container 3. With such an arrangement, even when the linear sliders 15 hold the body 20 of the twistlock 2 tightly, the twistlock 2 can still move along the movement direction Y of the linear sliders 15. In some embodiments, each of the linear sliders 15 is coupled to the respective clamp 13 via a linear slide rail 16. In other embodiments, each of the linear sliders 15 may be coupled to the respective clamp 13 via other connection mechanisms. The scope of the present disclosure is not intended to be limited in this respect.

In some embodiments, the gripper 1 further includes a pair of elastic elements (not shown in FIG. 5). Each of the elastic elements is arranged between the respective linear slider 15 and the respective clamp 13 to return the respective linear slider 15 when the body 20 of the twistlock 2 is released from the linear sliders 15. In some embodiments, each of the elastic elements includes at least one return spring, for example two return springs. In other embodiments, the elastic elements may be implemented in other forms. The scope of the present disclosure is not intended to be limited in this respect.

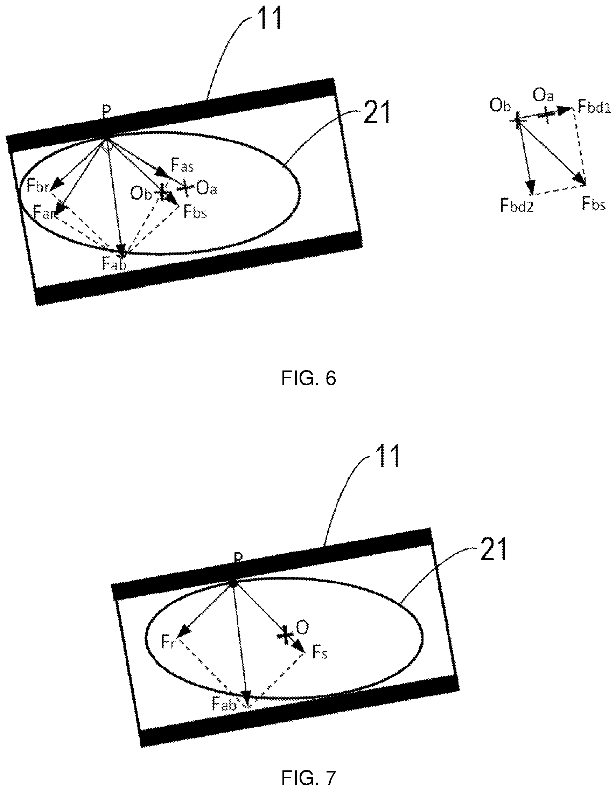

FIG. 6 illustrates a force condition of the first cone 21 of the twistlock 2 when the rotation axis Oa of the twister 11 is not aligned with the rotation axis Ob of the cones 21, 22 of the twistlock 2. As shown, upon being twisted by the twister 11, the first cone 21 of the twistlock 2 contacts the twister 11 at a contact point P. A contact force Fab is applied on the first cone 21 of the twistlock 2 by the twister 11. The contact force Fab can be decomposed into a force Fs (Fas or Fbs) along a line connecting the contact point P and the rotation axis O (Oa or Ob) and a force Fr (Far or Fbr) for generating the rotation of the first cone 21 of the twistlock 2. When the rotation axis Oa of the twister 11 is not aligned with the rotation axis Ob of the cones 21, 22 of the twistlock 2, the force Fbs may be decomposed into a first component force Fbd1 in a direction from the rotation axis Ob to the rotation axis Oa and a second component force Fbd2 in a vertical direction. The first component force Fbd1 may force the rotation axis Ob to move towards the rotation axis Oa until the rotation axis Ob is coincided with the rotation axis Oa.

FIG. 7 illustrates a force condition of the first cone 21 of the twistlock 2 when the rotation axis Oa of the twister 11 is aligned with the rotation axis Ob of the cones 21, 22 of the twistlock 2. As shown, when the rotation axis Oa is aligned with the rotation axis Ob, the force Fs would have no component force in the direction from the rotation axis Ob to the rotation axis Oa. Then, the rotation axis Ob would keep being aligned with the rotation axis Oa during the twisting of the first cone 21 of the twistlock 2.

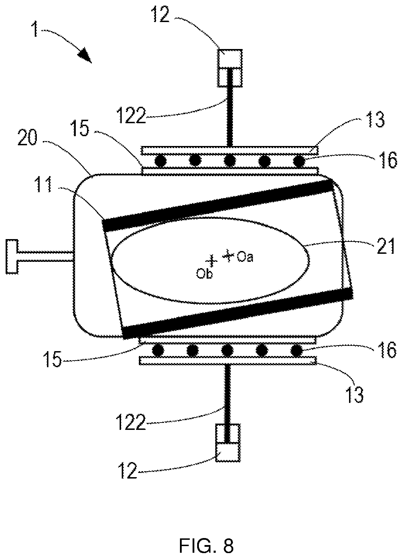

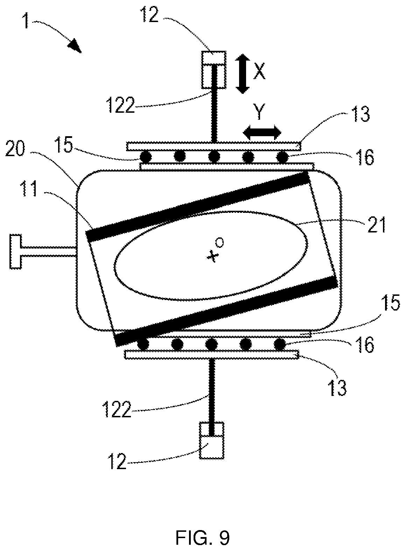

FIGS. 8 and 9 illustrate an automatic alignment process between the rotation axis Oa of the twister 11 and the rotation axis Ob of the cones 21, 22 of the twistlock 2, in accordance with an embodiment of the present disclosure. As shown in FIG. 8, the body 20 of the twistlock 2 is held by the linear sliders 15 and the first cone 21 of the twistlock 2 is being rotated by the twister 11. At this point, the rotation axis Ob of the cones 21, 22 of the twistlock 2 is not aligned with the rotation axis Oa of the twister 11. In this example, the rotation axis Ob is at the bottom left of the rotation axis Oa. However, it is to be understood that the rotation axis Oa and the rotation axis Ob may have other position relationship in embodiments of the present disclosure.

As described above with reference to FIGS. 5-7, when the rotation axis Oa of the twister 11 is not aligned with the rotation axis Ob of the cones 21, 22 of the twistlock 2, the contact force Fab applied by the twister 11 on the first cone 21 of the twistlock 2 may force the rotation axis Ob to move towards the rotation axis Oa until the rotation axis Ob is coincided with the rotation axis Oa. As shown in FIG. 9, since the body 20 of the twistlock 2 is held by the linear sliders 15, the twistlock 2 and the linear sliders 15 have moved upward along the movement direction X of the clamps, and have moved rightward along the movement direction Y of the linear sliders 15. In the end, the rotation axis Ob of the cones 21, 22 of the twistlock 2 is well aligned with the rotation axis Oa of the twister 11.

In embodiments of the present disclosure, two translational degrees of freedom are added to the clamps 13, thus rendering the gripper 1 self-adaptive to the misalignment between the rotation axis Oa of the twister 11 and the rotation axis Ob of the cones 21, 22 of the twistlock 2. In this way, a small driving force applied on the first cone 21 of the twistlock 2 would cause the first cone 21 to rotate, and thus the size of the motor for driving the twister 11 may be reduced. In addition, the overall payload of the robot can be reduced and the structure reliability becomes higher.

In embodiments of the present disclosure, a robot including the gripper 1 as described with reference to FIG. 5 is provided. The gripper 1 may be mounted on an end axis of the robot and formed as a portion of the robot.

## Claims

1. A gripper (1) for handling a twistlock (2), the twistlock (2) comprising a body (20), a first cone (21) and a second cone (22), the gripper (1) comprising:
a pair of clamps (13) arranged opposite to each other and configured to hold the body (20) of the twistlock (2) during mounting or dismounting the twistlock (2);
a twister (11) configured to twist the first cone (21) of the twistlock (2) when the body (20) of the twistlock (2) is held by the clamps (13); and
a pair of cylinders (12) each comprising a gas supply pipe (121) and an output shaft (122) connected to the respective clamp (13), **characterised in that** the gas supply pipes (121) of the cylinders (12) are in fluid communication with each other.

2. The gripper (1) according to claim 1, further comprising a gas supply source (14) connected to each of the gas supply pipes (121) to supply gas.

3. The gripper (1) according to claim 1, further comprising:
a pair of linear sliders (15) each arranged at an inner side (131) of the respective clamp (13) and configured to be slidable relative to the respective clamp (13) upon being driven by the body (20) of the twistlock (2); and
a pair of elastic elements each arranged between the respective linear slider (15) and the respective clamp (13) to return the respective linear slider (15) when the body (20) of the twistlock (2) is released from the linear sliders (15).

4. The gripper (1) according to claim 3, wherein each of the linear sliders (15) is coupled to the respective clamp (13) via a linear slide rail (16).

5. The gripper (1) according to claim 3, wherein each of the elastic elements comprises at least one return spring.

6. A robot comprising the gripper (1) according to any of claims 1-5.

## Patentansprüche

1. Greifer (1) zur Handhabung eines Drehriegels (2), wobei der Drehriegel (2) einen Körper (20), einen ersten Konus (21) und einen zweiten Konus (22) umfasst, wobei der Greifer (1) umfasst:
ein Paar Klemmen (13), die einander gegenüberliegend angeordnet und so konfiguriert sind, dass sie den Körper (20) des Drehriegels (2) während der Montage oder Demontage des Drehriegels (2) halten;
eine Verdreh-Vorrichtung (11), die so konfiguriert ist, dass sie den ersten Konus (21) des Drehriegels (2) verdreht, wenn der Körper (20) des Drehriegels (2) von den Klemmen (13) gehalten wird; und
ein Paar von Zylindern (12), die jeweils ein Gaszufuhrrohr (121) und eine mit der jeweiligen Klemme (13) verbundene Ausgangswelle (122) umfassen, **dadurch gekennzeichnet, dass** die Gaszufuhrrohre (121) der Zylinder (12) in Fluidverbindung miteinander stehen.

2. Greifer (1) nach Anspruch 1 ferner umfassend eine Gasversorgungsquelle (14), die mit jeder der Gasversorgungsleitungen (121) verbunden ist, um Gas zuzuführen.

3. Greifer (1) nach Anspruch 1, ferner umfassend:
ein Paar linearer Schieberegler (15), die jeweils an einer Innenseite (131) der jeweiligen Klemme (13) angeordnet und so konfiguriert sind, dass sie relativ zu der jeweiligen Klemme (13) gleiten können, wenn sie von dem Körper (20) des Drehriegels (2) angetrieben werden; und
ein Paar elastischer Elemente, die jeweils zwischen dem jeweiligen linearen Schieberegler (15) und der jeweiligen Klemme (13) angeordnet sind, um den jeweiligen linearen Schieberegler (15) zurückzuholen, wenn der Körper (20) des Drehriegels (2) von den linearen Schiebereglern (15) gelöst wird.

4. Greifer (1) nach Anspruch 3, wobei jeder der linearen Schieberegler (15) über eine lineare Gleitschiene (16) mit der jeweiligen Klemme (13) verbunden ist.

5. Greifer (1) nach Anspruch 3, wobei jedes der elastischen Elemente mindestens eine Rückstellfeder umfasst.

6. Roboter umfassend den Greifer (1) nach einem der Ansprüche 1-5.

## Revendications

1. Organe de préhension (1) servant à manipuler un verrou tournant (2), le verrou tournant (2) comprenant un corps (20), un premier cône 21) et un second cône (22), l'organe de préhension (1) comprenant :
une paire de pinces (13) disposées à l'opposé l'une de l'autre et conçues pour retenir le corps (20) du verrou tournant (2) pendant le montage ou le démontage du verrou tournant (2) ;
un tordoir (11) conçu pour tordre le premier cône (21) du verrou tournant (2) lorsque le corps (20) du verrou tournant (2) est retenu par les pinces (13) ; et
une paire de vérins (12) comprenant chacun un tuyau d'alimentation en gaz (121) et un arbre de sortie (122) raccordé à la pince respective (13), **caractérisé en ce que** les tuyaux d'alimentation en gaz (121) des vérins (12) sont en communication fluidique l'un avec l'autre.

2. Organe de préhension (1) selon la revendication 1, comprenant en outre une source d'alimentation en gaz (14) raccordée à chacun des tuyaux d'alimentation en gaz (121) pour fournir du gaz.

3. Organe de préhension (1) selon la revendication 1, comprenant en outre :
une paire de curseurs linéaires (15) disposés chacun sur un côté intérieur (131) de la pince respective (13) et conçus pour coulisser par rapport à la pince respective (13) lors de leur entraînement par le corps (20) du verrou tournant (2) ; et
une paire d'éléments élastiques disposés chacun entre le curseur linéaire respectif (15) et la pince respective (13) pour ramener le curseur linéaire respectif (15) lorsque le corps (20) du verrou tournant (2) est libéré des curseurs linéaires (15).

4. Organe de préhension (1) selon la revendication 3, dans lequel chacun des curseurs linéaires (15) est couplé à la pince respective (13) par le biais d'un rail coulissant linéaire (16).

5. Organe de préhension (1) selon la revendication 3, dans lequel chacun des éléments élastiques comprend au moins un ressort de rappel.

6. Robot comprenant l'organe de préhension (1) selon l'une quelconque des revendications 1 à 5.
